# EUROPÄISCHE PATENTSCHRIFT

(11) **EP 1 301 387 B1**
(45) Veröffentlichungstag und Bekanntmachung des Hinweises auf die Patenterteilung: **22.03.2006**
(21) Anmeldenummer: 01984099.0
(22) Anmeldetag: 03.07.2001
(51) Int. Cl.: B62D 5/04, B62D 6/00

(54) **VERFAHREN ZUM LENKEN EINES FAHRZEUGS MIT SERVOLENKUNG**
METHOD FOR STEERING A VEHICLE USING A POWER-ASSISTED STEERING SYSTEM
PROCEDE POUR DIRIGER UN VEHICULE A DIRECTION ASSISTEE

(30) Priorität: 04.07.2000 DE 10032340
(43) Veröffentlichungstag der Anmeldung: 16.04.2003
(73) Patentinhaber: ROBERT BOSCH GMBH, 70442 Stuttgart (DE); ZF Lenksysteme GmbH, 73527 Schwäbisch Gmünd (DE)
(72) Erfinder: DOMINKE, Peter, 74321 Bietigheim-Bissingen (DE); CAO, Chi-Thuan, 70825 Korntal-Muenchingen (DE); PFEIFFER, Wolfgang, 71723 Grossbottwar (DE); LEIMBACH, Klaus-Dieter, 73569 Eschach (DE); HARTER, Werner, 75428 Illingen (DE); BLESSING, Peter, 74078 Heilbronn (DE); LOHNER, Herbert, 71292 Friolzheim (DE)
(86) Internationale Anmeldenummer: PCT/DE2001/002396
(87) Internationale Veröffentlichungsnummer: WO 2002/002389

(56) Entgegenhaltungen:
- DE-A- 3 734 477
- US-A- 5 236 335
- PATENT ABSTRACTS OF JAPAN vol. 1998, no. 13, 30. November 1998 (1998-11-30) & JP 10 226350 A (TOYOTA MOTOR CORP;KOYO SEIKO CO LTD), 25. August 1998 (1998-08-25)

## Beschreibung

### Stand der Technik

Die Erfindung betrifft ein Verfahren zum Lenken eines Fahrzeugs und eine Lenkung für ein Fahrzeug nach dem Oberbegriff des nebengeordneten Anspruchs 14.

Bei Servolenkungen ist ein momentenunterstützender hydraulischer oder elektrischer Lenksteller vorhanden, welcher das zum Lenken des Fahrzeugs aufzubringende Moment verringert und somit den Fahrer entlastet. Außerdem sind bei modernen Servolenkungen die Momentenunterstützung und/oder das Übersetzungsverhältnis der Lenkung geschwindigkeitsabhängig. Bei niedrigen Geschwindigkeiten wie sie für das Ein- und Ausparken typisch sind, wird eine sehr direkte Lenkung mit großer Momentenunterstützung bevorzugt, während bei schneller Fahrt eine indirekte Lenkung mit geringer Momentenunterstützung wünschenswert ist.

Um die Fahrstabilität von Fahrzeugen weiter zu erhöhen, sind darüber hinaus Lenkungen bekannt, bei denen ein Fahrdynamikregler die Stellung der gelenkten Räder unabhängig vom Lenkwunsch des Fahrers verstellt. Dabei überlagert der Fahrdynamikregler dem Fahrerlenkwunsch einen zusätzlichen Lenkwinkel an der Lenksäule.

Bei diesen bekannten Lenkungen beeinflussen sich Momentenunterstützung und Fahrdynamikregelung gegenseitig, was folgende Nachteile mit sich bringt:
- Wegen der geringen Momentenunterstützung und der indirekten Lenkung bei hohen Fahrgeschwindigkeiten können Eingriffe in die Stellung der gelenkten Räder, welche von einem über ein Überlagerungsgetriebe auf die Lenksäule wirkenden Lenkradmotor vorgenommen werden, nicht mit der erforderlichen Geschwindigkeit vorgenommen werden.
- Die Momentenunterstützung und das Lenkgefühl, welches über das Lenkrad an den Fahrer übermittelt wird, können nicht unabhängig voneinander beeinflusst und eingestellt werden.
- Die Integration weiterer Funktionen in die Lenkung ist, wenn überhaupt, nur mit Schwierigkeiten möglich.

Aus der JP 10226350 A und der DE 3734477 A sind Kraftfahrzeuglenkungen mit einer Fahrdynamikregelung bekannt. ,die den nächstliegenden Stand der Technik bildet, Aus der DE 3734477 A ist eine Fahrzeuglenkung bekannt bei der die Räder einer Vorderachse in konventioneller Weise über das Lenkrad gelenkt werden, während die Räder der Hinterachse in Abhängigkeit des Lenkradwinkels und der Fahrgeschwindigkeit gelenkt werden.

Der Erfindung liegt die Aufgabe zugrunde, ein Verfahren zum Lenken eines Fahrzeugs bereitzustellen, bei welchem Momentenunterstützung und Fahrdynamikregelung sich nicht negativ beeinflussen. Außerdem soll das erfindungsgemäße Verfahren einfach an verschiedene Fahrzeugtypen adaptierbar sein und die Integration weiterer Funktionen erleichtern.

Diese Vier-Rad-Lenkung ist sehr aufwendig in der Herstellung und auch regelungstechnisch schwer zu beherrschen.

Diese Aufgabe wird erfindungsgemäß gelöst durch ein Verfahren zum Lenken eines Fahrzeugs, bei welchem
- der Lenkradwinkel erfasst wird,
- der Lenkradwinkel fahrgeschwindigkeitsabhängig modifiziert wird,
- ein Korrekturlenkwinkel in Abhängigkeit der Fahrdynamik des gelenkten Fahrzeugs ermittelt wird,
- der modifizierte Lenkradwinkel und der Korrekturlenkwinkel zu einem Soll-Lenkwinkel überlagert werden,
- die Stellung der gelenkten Räder erfasst wird,
- die Winkeldifferenz zwischen Soll-Lenkwinkel und der Stellung der gelenkten Räder gebildet wird,
- die Stellung der gelenkten Räder in Abhängigkeit der Winkeldifferenz (δ_{Ritzel, Soll} - δ_{Ritzel}) geregelt wird und
- der Korrektur-Lenkradwinkel an der Lenksäule kompensiert wird.

### Die Erfindung und ihre Vorteile

Bei diesem erfindungsgemäßen Verfahren findet der Fahrdynamikeingriff nicht durch Ansteuern des auf die Lenksäule wirkenden Lenkradmotors, sondern durch Ansteuern eines auf die gelenkten Räder wirkenden Lenkmotors statt. Dadurch ist der Fahrdynamikeingriff unabhängig von der Momentenunterstützung des Lenkstellers und außerdem wird die Lenksäule von der Übertragung des durch den Fahrdynamikeingriff verursachten Moments entlastet.

Der Lenkradmotor einer nach dem erfindungsgemäßen Verfahren arbeitenden Lenkung dient nur noch der Kompensation der durch den Fahrdynamikeingriff verursachten Änderung der Stellung der gelenkten Räder, so dass das Lenkgefühl unabhängig von der Momentenunterstützung beeinflusst werden kann. Dadurch wird eine nach dem erfindungsgemäßen Verfahren arbeitende Lenkung einfacher adaptierbar und regelungstechnisch einfacher zu beherrschen. Außerdem erhöht sich die Sicherheit der Lenkung, da die Lenksäule gegenüber herkömmlichen Servolenkungen mit Fahrdynamikregelung entlastet wird. Diese Kompensation ist nicht auf die Änderung des Lenkgefühls beschränkt, die durch den Fahrdynamikeingriff verursacht wird, sondern kann auch bei anderen Ursachen für eine Änderung des Lenkgefühls eingesetzt werden.

Varianten der Erfindung sehen vor, dass die Stellung der gelenkten Räder durch einen ersten Positionsregler mit PD-Charakteristik oder Kaskadenstruktur geregelt wird, dass das Ausgangssignal des ersten Positionsreglers ein vom Lenkmotor auf das Ritzel zu übertragendes Sollmoment ist, dass das Sollmoment in einen Sollstrom umgewandelt wird und dass der Lenkmotor mit dem Sollstrom angesteuert wird, so dass eine hohe Regelgüte gewährleistet ist.

Außerdem können in das erfindungsgemäße Verfahren weitere Funktionen ohne großen Aufwand integriert werden. Dabei bleibt eine nach dem erfindungsgemäßen Verfahren arbeitende Lenkung weiterhin einfach adaptierbar.

Bei einer Ergänzung des erfindungsgemäßen Verfahrens weist der erste Positionsregler eine nicht-lineare statische Kennlinie oder eine adaptiv verstellbare Kennlinie auf, so dass das Regelungsverhalten weiter verbessert wird.

In weiterer Ausgestaltung des erfindungsgemäßen Verfahrens ist vorgesehen, dass der modifizierte Lenkradwinkel (δ_{H*}) in eine Soll-Gierrate (ω_{ref}) oder eine Soll-Querbeschleunigung (a_{y}) umgewandelt wird, und dass ein Korrektur-Lenkradwinkel (Δδ_{H, Soll}) in Abhängigkeit der Soll-Gierrate (ω_{ref}) oder der Soll-Querbeschleunigung (a_{y}) geregelt wird, so dass die Fahrstabilität des Fahrzeugs durch eine Beeinflussung der Stellung der gelenkten Räder weiter erhöht wird. Ausgangssignal des Gier-Reglers ist ein Korrektur-Lenkradwinkel (Δδ_{H, Soll}), welches der Führungsgröße des ersten Positionsreglers überlagert werden kann und außerdem als Führungsgröße zur Kompensation der Lenkbewegung an der Lenksäule benutzt werden kann.

In Ergänzung des Verfahrens ist der Gier-Regler ein PD-Regler oder ein Modellfolgeregler, so dass ein stabiles Regelverhalten hoher Regelgüte erzielt wird.

In weiterer Ergänzung des erfindungsgemäßen Verfahrens ist vorgesehen, dass der Korrektur-Lenkradwinkel in ein Korrekturmoment umgewandelt wird, dass das zwischen beiden Teilen der Lenksäule vorhandene Differenz-Moment gemessen wird, dass die Momentendifferenz aus dem Korrekturmoment und dem Differenz-Moment gebildet wird, und dass der Korrektur-Lenkradwinkel in Abhängigkeit der Momentendifferenz kompensiert wird. Durch die Regelung des Handmoments kann die Änderung des Lenkgefühls, welches sich aus einem Eingriff des Fahrdynamikreglers in die Stellung der gelenkten Räder ergibt, vollständig kompensiert werden, so dass der Fahrer des Fahrzeugs nichts von diesem Eingriff spürt.

Bei einer anderen erfindungsgemäßen Ausgestaltung des Verfahrens ist vorgesehen, dass der Korrektur-Lenkradwinkel in ein Korrekturmoment umgewandelt wird, dass das Korrekturmoment in einen Soll-Korrekturstrom umgewandelt wird, und dass der Korrektur-Lenkradwinkel am Lenkrad in Abhängigkeit des Soll-Korrekturstroms kompensiert wird, so dass auf einen Momentensensor an der Lenksäule verzichtet werden kann.

Eine weitere Ergänzung des erfindungsgemäßen Verfahrens sieht vor, dass die Drehwinkel-Differenz zwischen beiden Teilen der Lenksäule gemessen wird, dass die Winkeldifferenz aus Korrektur-Lenkradwinkel und Drehwinkel-Differenz gebildet wird, und dass der Korrektur-Lenkradwinkel am Lenkrad in Abhängigkeit der Winkeldifferenz kompensiert wird, so dass anstelle eines Momentensensors ein Winkelsensor an der Lenksäule eingesetzt werden kann.

Bei einer anderen Ausgestaltung der Erfindung ist vorgesehen, dass eine Spurführungs-Lenkradwinkeländerung ermittelt wird, und dass in Abhängigkeit der Spurführungs-Lenkradwinkeländerung und des modifizierten Lenkradwinkels dem Soll-Lenkmoment eine Soll-Momentendifferenz überlagert wird, so dass, ohne in die Struktur des erfindungsgemäßen, Verfahrens einzugreifen, eine Spurführungsregelung in das Verfahren integriert werden kann. In gleicher Weise können weitere Funktionen in das erfindungsgemäße Verfahren integriert werden.

In weiterer Ergänzung der Erfindung ist vorgesehen, dass eine Spurführungs-Lenkradwinkeländerung ermittelt wird, dass die Winkeldifferenz aus modifiziertem Lenkradwinkel und Spurführungs-Lenkradwinkeländerung gebildet wird, dass in Abhängigkeit der Winkeldifferenz dem modifizierten Lenkradwinkel eine Spurführungs-Lenkradwinkeldifferenz überlagert wird, und dass in Abhängigkeit des daraus resultierenden Soll-Lenkradwinkels der Soll-Lenkwinkel geregelt wird, so dass der Fahrer durch die Änderung des vom Lenkrad auf seine Hände übertragenen Moments den Eingriff durch den Spurführungsregler spürt.

Bei beiden Varianten der Integration der Spurführungsregelung spürt der Fahrer den Eingriff über das Lenkgefühl und er kann entscheiden, ob er diese Kursvorgabe annehmen will oder nicht. Der Fahrer behält jedoch nach wie vor die Verantwortung für die Fahrtrichtung des Fahrzeugs; er kann die Vorgabe des Spurführungsreglers auch ignorieren.

Die eingangs genannte Aufgabe wird auch gelöst durch eine Lenkung für ein Fahrzeug mit einem an einer Lenksäule angeordneten Lenkrad, mit einem an der Lenksäule angeordneten Drehwinkel oder Momentensensor, mit einem Lenkgetriebe, mit einem hydraulischen oder elektrischen Lenksteller, mit einem zweiten Drehwinkelsensor zur Messung der Stellung der gelenkten Räder und mit einem Steuergerät, wobei ein auf die gelenkten Räder wirkender Lenkmotor vorhanden ist und wobei das Steuergerät ein Steuergerät nach Anspruch 11 ist, so dass die Vorteile des erfindungsgemäßen Verfahrens auch bei dieser Lenkung zum Tragen kommen.

Weitere Vorteile und vorteilhafte Ausgestaltungen der Erfindung sind der nachfolgenden Zeichnung, deren Beschreibung und den Patentansprüchen entnehmbar.

### Zeichnung

Ausführungsbeispiele des erfindungsgemäßen Verfahrens sind in der folgenden Zeichnung dargestellt und nachfolgend beschrieben. Es zeigen:
- Fig. 1: die schematische Darstellung eines Servolenksystems mit zwei Lenkstellern,
- Fig. 2: das Blockschaltbild des erfindungsgemäßen Verfahrens,
- Fig. 3: ein Beispiel einer nicht-linearen adaptiven Kennlinie,
- Fig. 4: ein Beispiel einer geschwindigkeitsabhängigen Übersetzung der Lenkung,
- Fig. 5: eine erfindungsgemäße geschwindigkeitsabhängige Momentenunterstützung,
- Fig. 6: ein Blockschaltbild der Fahrdynamikregelung,
- Fig. 7a: die Winkelkompensation an der Lenksäule über eine Momentenregelung,
- Fig. 7b: die Winkelkompensation an der Lenksäule über eine Momentensteuerung,
- Fig. 8: die Winkelkompensation an der Lenksäule über eine Positionsregelung und
- Fig. 9: ein zweites Ausführungsbeispiel einer Spurführung.

### Beschreibung der Ausführungsbeispiele

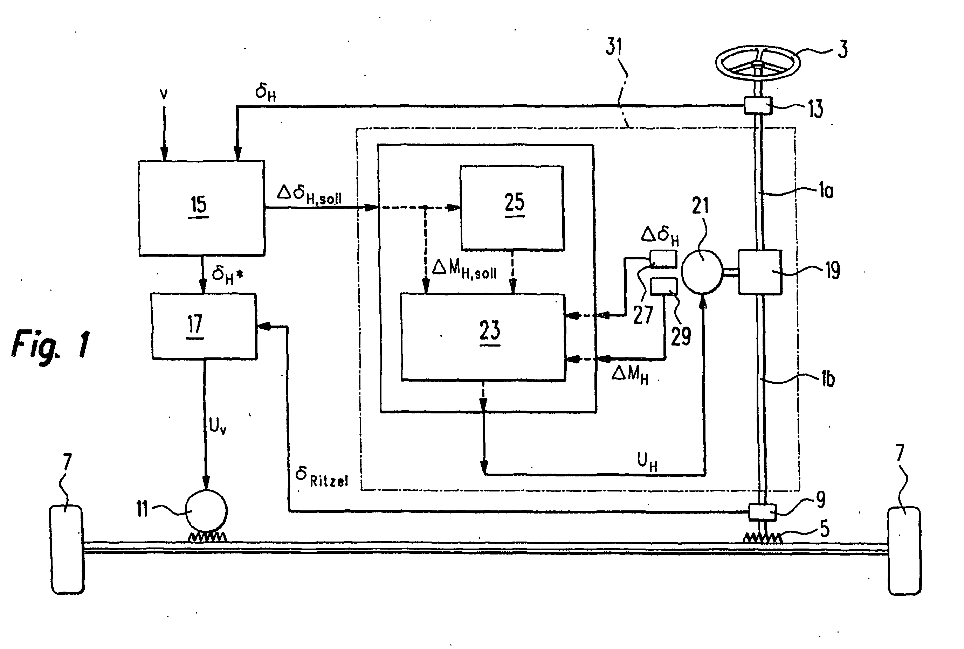

In Fig. 1 ist die Servolenkung eines Fahrzeugs mit zwei Lenkstellern schematisch dargestellt. Ein an einer Lenksäule 1 befestigtes Lenkrad 3 ist über ein Lenkgetriebe 5 mit den gelenkten Rädern 7 des Fahrzeugs verbunden. Im Zusammenhang mit der Erfindung werden unter dem Begriff "Lenkrad" alle Arten von Lenkhandhaben verstanden. Das Lenkgetriebe 5 besteht im Wesentlichen aus einer schematisch dargestellten Zahnstange und einem in Fig. 1 nicht dargestellten drehfest mit der Lenksäule 1 verbundenen Ritzel. An der Lenksäule 1 ist ein erster Drehwinkelsensor 9 angeordnet, mit welchem der Drehwinkel δ_{Ritzel} des Ritzels des Lenkgetriebes 5 und damit die Stellung der gelenkten Räder 7 gemessen wird.

Ein elektrischer Lenkmotor 11 dient der Momentenunterstützung beim Lenken des Fahrzeugs. Zur Regelung des Lenkmotors 11 ist im oberen Teil der Lenksäule 1 ein zweiter Drehwinkelsensor 13 vorgesehen, mit dem der durch Drehen des Lenkrads 3 geäußerte Fahrerlenkwunsch in Form eines Lenkradwinkels δ_{H} erfasst wird. Der Lenkradwinkel δ_{H} wird in einer Sollwertbildung 15 bspw. abhängig von der Geschwindigkeit v des Fahrzeugs modifiziert. Dieser modifizierte Lenkradwinkel δ_{H*} ist die Führungsgröße eines Lenkreglers 17, in welchem auch der vom ersten Drehwinkelsensor 9 gemessene Drehwinkel δ_{Ritzel} Eingang findet. Über eine Steuerspannung Uᵥ wird der Lenkmotor 11 vom Lenkregler 17 angesteuert und unterstützt dadurch die Lenkbewegung des Fahrzeugs.

An der Lenksäule 1 ist ein Überlagerungsgetriebe 19 angeordnet. Das Überlagerungsgetriebe 19 ist in der Regel als Planetengetriebe ausgeführt und teilt die Lenksäule 1 in zwei Abschnitte la und 1b. Dem vom zweiten Drehwinkelsensor 13 gemessenen Lenkradwinkel δ_{H} kann mittels des Überlagerungsgetriebes 19 ein weiterer Drehwinkel überlagert werden, so dass der vom ersten Drehwinkelsensor 9 gemessene Drehwinkel δ_{Ritzel} nicht immer gleich dem Lenkraddrehwinkel δ_{H} ist.

Angetrieben wird das Überlagerungsgetriebe 19 von einem Lenkradmotor 21, welcher ein in Fig. 1 nicht dargestelltes selbsthemmendes mechanisches Getriebe aufweist und über dieses Getriebe mit dem Überlagerungsgetriebe 19 gekoppelt ist.

Geregelt wird der Lenkradmotor 21 von einem Lenkradregler 23, dessen Führungsgröße entweder der von der Sollwertbildung 15 ausgegebene Korrektur-Lenkradwinkel Δδ_{H,Soll} oder die von einem ersten Umwandler 25 aus dem Korrektur-Lenkradwinkel Δδ_{H,Soll} berechnete Korrekturmoment ΔM_{H,Soll} ist. Je nach Ausführungsform wird in den Lenkradregler 23 entweder der von einem dritten Drehwinkelsensor 27 gemessene Ist-Drehwinkel *Δ*δ_{H} oder das von einem ersten Momentensensor 29 gemessene Differenz-Moment ΔM_{H} zurückgeführt.

Anhand von Fig. 1 ist der Unterschied zwischen der Momentenunterstützung, die auch einen aktiven Lenkeingriff durch Ändern der Stellung der gelenkten Räder 7 abweichend vom Fahrerlenkwunsch umfassen kann, durch den Lenkmotor 11 und der dadurch erforderlichen Lenkgefühlkompensation, die in Fig. 1 durch einem Rahmen 31 optisch zusammengefasst ist, erkennbar.

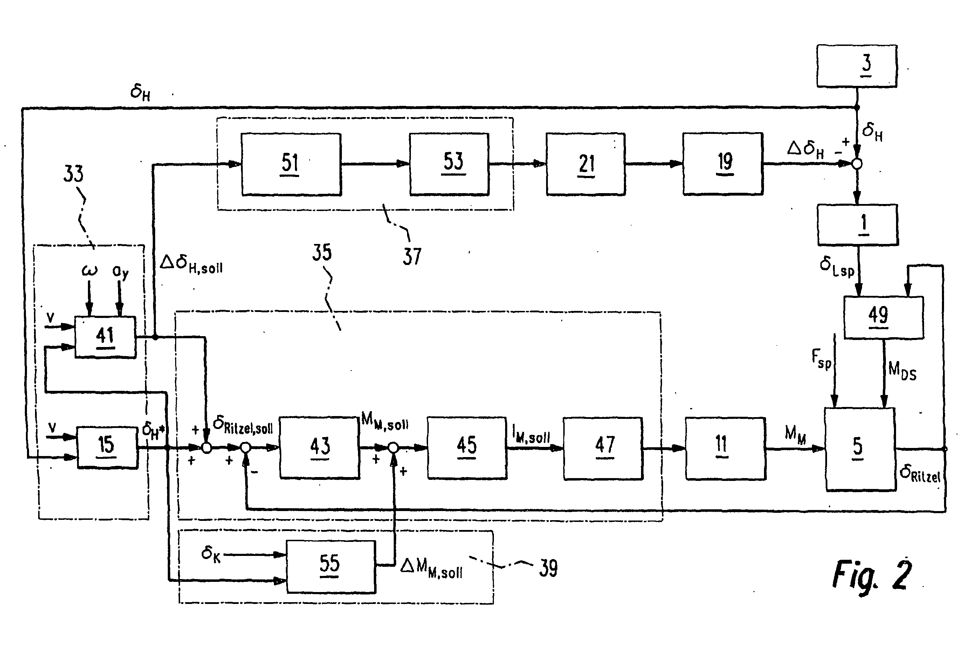

In Fig. 2 ist das Regelungskonzept der erfindungsgemäßen Lenkung näher beschrieben. Gleiche Bauteile bzw. Blöcke haben die gleichen Bezugszeichen. Es gilt das bezüglich einer Figur Gesagte für die anderen Figuren entsprechend. Das Blockschaltbild der Fig. 2 ist in mehrere Blöcke 33, 35, 37 und 39 zusammengefasst, die nachfolgend erläutert werden.

Im Block 33 sind die Sollwertbildung 15 und ein Fahrdynamikregler 41 zusammengefasst. Das Ausgangssignal der Sollwertbildung 15 ist der modifizierte Lenkradwinkel δ_{H*}, welcher als Eingangsgröße des Fahrdynamikreglers 41 dient. Der Fahrdynamikregler 41 benötigt darüber hinaus die Geschwindigkeit v und die Gier-Rate ω oder die Querbeschleunigung a_{y} des Fahrzeugs. Daraus berechnet der Fahrdynamikregler 41 einen Korrektur-Lenkradwinkel Δδ_{H,Soll}. Der Korrektur-Lenkradwinkel Δδ_{H,Soll} und der modifizierte Lenkradwinkel δ_{H*} werden in einer Additionsstelle addiert und bilden die Führungsgröße δ_{Ritzel,Soll} des ersten Positionsreglers 43.

In dem Block 35, welcher auch den Positionsregler 43 umfasst, wird die Regelung der Stellung der gelenkten Räder 7 vorgenommen. Der erste Positionsregler 43 steuert den Lenkmotor 11 so an, dass der Ritzelwinkel δ_{Ritzel}, welcher vom ersten Drehwinkelsensor 5 gemessen wird, der Führungsgröße δ_{Ritzel,Soll} folgt. Das dazu erforderliche, vom Lenkmotor 11 aufzubringende Soll-Lenkmoment M_{M,Soll} ist die Ausgangsgröße des ersten Positionsreglers 43. Über einen zweiten Umwandler 45 wird das Soll-Lenkmoment M_{M,Soll} in einen Sollstrom I_{H,Soll} umgewandelt. Die zur Momentenunterstützung notwendige Momenten-/Stromumwandlung hängt auch von der Bauart des Lenkmotors 11 ab. Im Fall eines Gleichstrommotors ist der Zusammenhang zwischen Strom und Moment linear. Bei Asynchronmotoren ist die Umwandlung nicht-linear und betriebspunktabhängig, so dass vorgeschlagen wird, die sogenannte feldorientierte Regelung beim zweiten Umwandler 45 einzusetzen.

Ein erster Stromregler 47 wandelt den Sollstrom I_{M,Soll} in eine entsprechende Spannung um, mit der der Lenkmotor 11 angesteuert wird. Der Lenkmotor 11 erzeugt dadurch ein Motormoment M_{M}, welches zu dem vom Lenkgetriebe 5 aufgebrachten Lenkmoment addiert wird. In Fig. 2 ist das Lenkgetriebe 5 als Zahnstangenlenkung ausgeführt. Ein Drehstab 49 sorgt für ein Handmoment M_{DS} des Lenkgetriebes 5. Auf das Lenkgetriebe 5 wirkt außerdem noch die Spurstangenkraft F_{Sp} ein.

Damit der Fahrer einen Eingriff des Fahrdyriamikreglers 41 nicht am Lenkrad 3 spürt, ist ein Kompensationsregler 51 vorgesehen, dessen Führungsgröße der Korrektur-Lenkradwinkel Δδ_{H,Soll} ist. Über einen zweiten Stromregler 53 wird der Lenkradmotor 21 angesteuert. Dieser treibt das Überlagerungsgetriebe 19 an, so dass der durch den Korrektur-Lenkradwinkel Δδ_{H,Soll} verursachte Eingriff in die Stellung der gelenkten Räder 7 sich nicht am Lenkrad 3 bemerkbar macht.

Als weitere Funktion des erfindungsgemäßen Lenksystems ist eine Spurführungsregelung 39 mit einem Spurführungsregler 55 dargestellt. Im Falle einer automatischen Spurführung des Fahrzeugs wird eine Kursvorgabe δ_{K}, die bspw. mit Hilfe einer auf die Fahrbahn gerichteten Video-Kamera ermittelt wird, mit dem modifizierten Lenkradwinkel δ_{H*} verglichen und mit Hilfe des Spurführungsreglers 55 eine Sollmomenten-Differenz ΔM_{M,Soll} erzeugt, die auf das Soll-Lenkmoment M_{M,Soll} addiert wird. Da die Sollmomenten-Differenz ΔM_{M,Soll} nicht in der Kompensationsregelung 37 berücksichtigt wird, spürt der Fahrer die Sollmomenten-Differenz ΔM_{M,Soll} der Spurführungsregelung am Lenkrad 3, so dass er entscheiden kann, ob er der Spurführungsregelung 39 folgen will oder ob er seinen Lenkwunsch aufrechterhält. Auf diese Weise bekommt der Fahrer die Lenkhilfe im Sinne einer Spurführung und behält nach wie vor die Verantwortung für die Lenkentscheidung.

In gleicher Weise wie die Fahrdynamikregelung 41 und die Spurführungsregelung 39 können weitere Funktionen in das erfindungsgemäße Lenksystem integriert werden. Dabei gibt es die Möglichkeit, die Auswirkungen dieser Funktion auf das Lenkrad zu kompensieren, wie bspw. im Falle der Fahrdynamikregelung vorgeschlagen oder sie nicht zu kompensieren, wie im Falle der Spurführungsregelung 39 vorgeschlagen.

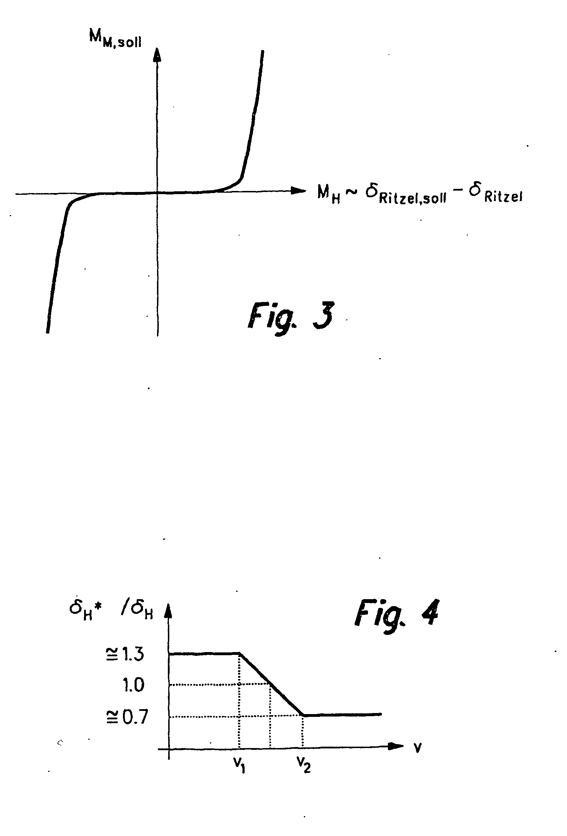

In Fig. 3 ist eine mögliche Kennlinie eines ersten Positionsreglers 43 dargestellt. Der Entwurf des Positionsreglers hängt stark von dem Lenkmotor 11 ab und wird nicht näher erläutert. Grundsätzlich eignen sich Regler mit digitalen Algorithmen auf der Basis einer PD-Struktur, einer Kaskadenstruktur oder einer generell adaptiven Struktur. Die grundsätzliche Idee ist dabei, die Erzeugung der Sollmomentenunterstützung M_{M,Soll} mit Hilfe einer Positionsregelung. Damit bestimmte gewünschte Unterstützungsverhalten erreicht werden können, sind ergänzend zu den o. g. linearen Reglertypen noch nicht-lineare statische Kennlinien oder adaptive verstellbare Reglerverstärkungen notwendig. In Fig. 3 ist eine nicht-lineare statische Kennlinie eines ersten Positionsreglers 43 dargestellt.

Anhand der Fig. 4 wird eine mögliche Realisierung des modifizierten Lenkradwinkels δ_{H*} erläutert. Das Lenkgetriebe 5 der Zahnstangenlenkung wird konstruktiv mit einer festen Lenkwinkeluntersetzung von 17 : 1 bis 15 : 1 ausgelegt. Diese Untersetzung wird vom Fahrer bei mittleren Fahrgeschwindigkeiten v als angenehm empfunden. Beim Rangieren ist es erwünscht, dass mit kleinem Lenkradwinkel große Radeinschlagwinkel erzielt werden, d. h. die Lenkwinkeluntersetzung soll bei niedriger Geschwindigkeit auf bspw. 8 : 1 verkleinert werden. Bei höherer Geschwindigkeit soll die Lenkwinkeluntersetzung vergrößert werden auf bspw. 20 : 1. Diese geschwindigkeitsabhängige Lenkuntersetzung wird durch die in Fig. 4 skizzierte Anordnung erfüllt. In Fig. 4 ist ein nicht-linearer Zusammenhang zwischen dem modifizierten Lenkradwinkel δ_{H*} und dem Lenkradwinkel δ_{H} in Abhängigkeit der Fahrgeschwindigkeit v dargestellt. Bei Geschwindigkeiten kleiner v₁ ist das Verhältnis δ_{H*} : δ_{H} = 1, 3; bei Geschwindigkeiten größer v₂ ist dieses Verhältnis = 0,7. Im Geschwindigkeitsbereich zwischen v₁ und v₂ ändert sich das Verhältnis δ_{H*} zu δ_{H} linear.

Da δ_{H*} Teil der Führungsgröße des ersten Positionsreglers 43 ist, wird der Lenkmotor 11 so lange angesteuert, bis der Winkel δ_{Ritzel} der Führungsgröße δ_{Ritzel,Soll} entspricht. Wegen der in Fig. 4 dargestellten nicht-linearen Kennlinie der Sollwertbildung 15 ist der Zusammenhang zwischen δ_{Ritzel} und δ_{H} ebenfalls nicht-linear. Über den Fahrdynamikregler 41 findet δ_{H*} als Δδ_{H,Soll} mittelbar Eingang in die Kompensationsregelung, so dass der Fahrer am Lenkrad 3 nichts von der sich ändernden Lenkuntersetzung spürt.

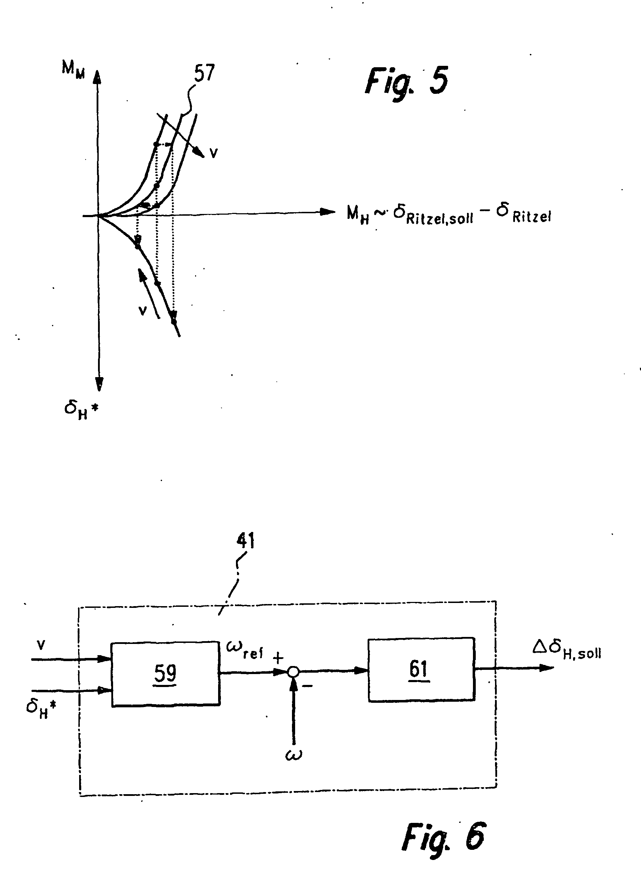

Durch die geschwindigkeitsabhängige Lenkübersetzung wird gleichzeitig auch eine geschwindigkeitsabhängige Momentenunterstützung realisiert. In Fig. 5 ist die Realisierung der geschwindigkeitsabhängigen Momentenunterstützung durch die Kombination der geschwindigkeitsabhängigen Lenkübersetzung und einer M_{H}/M_{M-}Kennlinie dargestellt. Im oberen Teil von Fig. 5 ist eine geschwindigkeitsabhängige Momentenunterstützung durch eine Schar von M_{H}/M_{M}-Kennlinien nach dem Stand der Technik dargestellt. Die geschwindigkeitsabhängige Momentenunterstützung kann aber auch durch eine Kennlinie 57 unter Zuhilfenahme der im unteren Teil von Fig. 5 dargestellten geschwindigkeitsabhängigen Lenkübersetzung erzielt werden. Diese geschwindigkeitsabhängige Momentenunterstützung ist einfacher und kostengünstiger zu realisieren. Aufgrund der geschwindigkeitsabhängigen Lenkübersetzung wandelt sich.die Momentenunterstützung auch entsprechend der Geschwindigkeit, d. h. bei niedriger Geschwindigkeit ist die Lenkung direkter und die Momentenunterstützung größer als bei höherer Geschwindigkeit.

In Fig. 6 ist der Fahrdynamikregler 41 im Detail dargestellt. Der Fahrdynamikregler 41 besteht aus einem Referenzmodell 59, welches, ausgehend vom modifizierten Lenkradwinkel δ_{H*} und der Geschwindigkeit v des Fahrzeugs eine Referenz-Gierrate ω_{ref} berechnet. Dabei werden sowohl die geschwindigkeitsabhängige Lenkübersetzung als auch die Kinematik der Lenkung berücksichtigt. Die Differenz aus der Referenz-Gierrate ω_{ref} und der von einem nicht dargestellten Gier-Sensor gemessenen Gier-Rate ω des Fahrzeugs ist die Führungsgröße eines Gier-Reglers 61. Daraus ermittelt der Gier-Regler 61 einen Korrektur-Lenkradwinkel Δδ_{H,Soll}, welcher, wie aus Fig. 2 ersichtlich, sowohl Eingang in die Führungsgröße des ersten Positionsreglers 43 als auch in die Kompensationsregelung 37 findet.

Der geschwindigkeitsabhängige modifizierte Lenkradwinkel δ_{H*} wird mit Hilfe des Gier-Reglers 61 so angepasst, dass ein gewünschtes Gier-Verhalten des Fahrzeugs eingehalten wird. Das Referenzmodell 59 dient dazu, das gewünschte Gier-Verhalten in Form einer Soll-Gier-Geschwindigkeit ω_{ref} vorzugeben. Der Gier-Regler kann ein standardmäßiger PID-Regler oder ein robuster Modellfolge-Regler sein. Alternativ zur Gierrate ω kann auch die Querbeschleunigung a_{y} zur Fahrdynamikregelung verwendet werden.

Die erfindungsgemäße Sollwertbildung für die positionsgeregelte Momentenunterstützung ist sehr vorteilhaft, weil die Anforderungen "variable, geschwindigkeitsabhängige Momentenunterstützung" und "Fahrdynamikregelung" miteinander erfüllt werden können. Dies ergibt sich unter anderem aus Fig. 5. Normalerweise erfolgen Fahrdynamikeingriffe bei höherer Geschwindigkeit v. Dort ist die Momentenunterstützung normalerweise gering. Durch die Überlagerung des Fahrdynamikkorrekturwinkels Δδ_{H,Soll} hat man jedoch die Möglichkeit, die Momentenunterstützung auch bei höheren
Fahrgeschwindigkeiten im Sinne des Fahrdynamikeingriffs zu erhöhen. Damit wird vermieden, dass Positionsregelung und Fahrdynamikregelung wie im Stand der Technik gegeneinander arbeiten.

Durch die Überlagerung des Korrektur-Lenkradwinkels Δδ_{H,Soll} auf die Führungsgröße des ersten Positionsreglers 43 entsteht gleichzeitig eine Veränderung des Lenkgefühls, das in Form einer Lenkwinkeldifferenz über die Lenksäule 1 an das Lenkrad 3 und damit auf den Fahrer übertragen wird. Wenn die Veränderung des Lenkgefühls vermieden werden soll, muss die Lenkwinkeldifferenz wie oben beschrieben kompensiert werden.

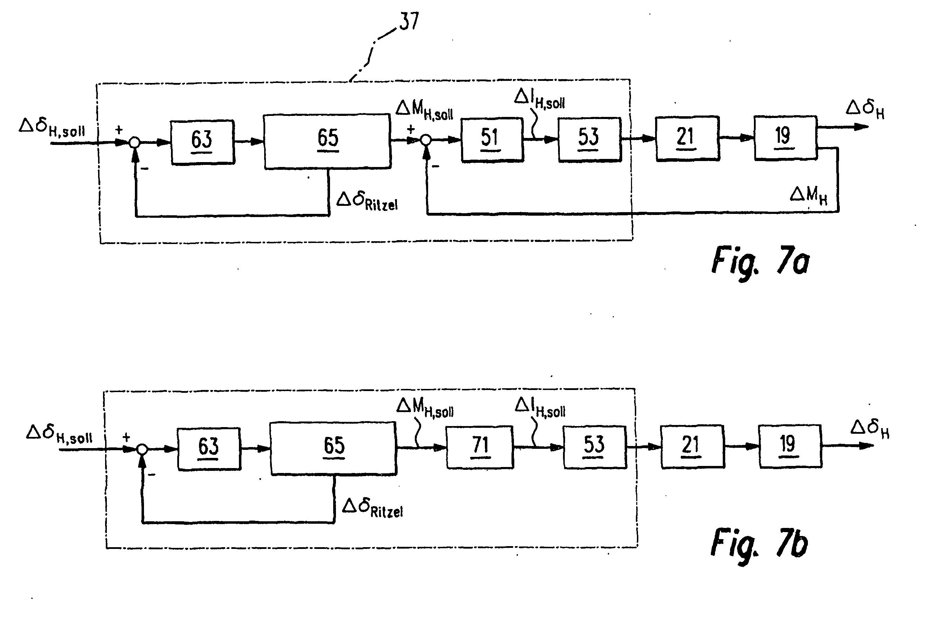

In Fig. 7a ist eine erste Ausführungsvariante einer Kompensation des Korrektur-Lenkradwinkels Δδ_{H,Soll} am Lenkrad 3 als Blockschaltbild dargestellt. Die Eingangsgröße Δδ_{H,Soll} der Kompensationsregelung 37 wird durch eine Nachbildung des Regelkreises der Positionsregelung 35 sowie des Lenkmotors 11 und des Lenkgetriebes 5 in ein Korrekturmoment ΔM_{H,Soll} umgewandelt. Diese Umwandlung wird durch einen dem ersten Positionsregler 43 entsprechenden zweiten Positionsregler 63 und ein Lenkungsmodell 65 vorgenommen. Das Soll-Korrektur-Lenkradmoment ΔM_{H,Soll} bildet zusammen mit dem am Überlagerungsgetriebe 19 gemessenen Differenz-Moment ΔM_{H} die Eingangsgröße des Kompensationsreglers 51. Über den zweiten Stromregler 53 wird der Lenkradmotor 21 angesteuert, so dass das Überlagerungsgetriebe 19 dem oberen Abschnitt 1a der Lenksäule 1 einen Korrektur-Lenkwinkel Δδ_{H} überlagert und der Fahrer vom Eingriff des Fahrdynamikreglers 41 am Lenkrad 3 nichts spürt.

Die Idee dieser Ausführungsform liegt darin, die durch den Fahrdyanmikeingriff verursachte Lenkgefühlsveränderung, die sich aus dem Soll-Korrektur-Lenkradmoment ΔM_{H,Soll} ergibt, aus dem Korrektur-Lenkradwinkel Δδ_{H,Soll} zu berechnen und anschließend zu kompensieren.

In Fig. 7b ist eine zweite Ausführungsform einer Winkelkompensation dargestellt. Statt einer Momentenregelung wird hier eine Momentensteuerung vorgeschlagen, so dass auf einen Drehmomentsensor im Überlagerungsgetriebe 19 verzichtet werden kann. Anstelle des Kompensationsreglers 51 wird ein dritter Umwandler 71 eingesetzt, welcher das Soll-Korrektur-Lenkradmoment ΔM_{H,Soll} in einen Soll-Korrekturstrom ΔI_{H,Soll} umwandelt.

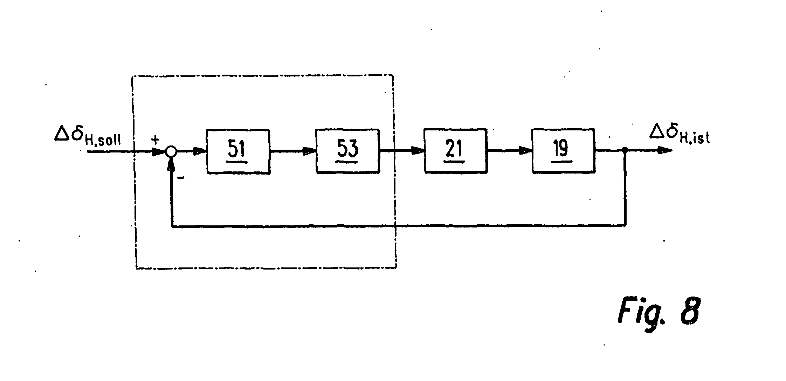

Eine dritte Ausführung der Winkelkompensation ist in Fig. 8 dargestellt. Bei dieser Ausführungsform ist der Kompensationsregler 51 als Positionsregler ausgeführt. Der Korrektur-Lenkradwinkel Δδ_{H,Soll} wird mit einer am Überlagerungsgetriebe 19 gemessenen Drehwinekldifferenz Δδ_{H} verglichen und über den zweiten Stromwandler 53 der Lenkradmotor 21 so angesteuert, dass die Änderung des Lenkgefühls am Lenkrad 3 aufgehoben wird.

Die Kompensation der Änderung des Lenkgefühls wurde bislang anhand eines Eingriffs in die Stellung der gelenkten Räder durch den Fahrdynamikregler 41 erläutert. Weitere Einflüsse, die für den Fahrer störend sind, können auch durch die in den Fig. 7 und 8 beschriebenen Kompensationsregelungen und -steuerungen eliminiert werden.

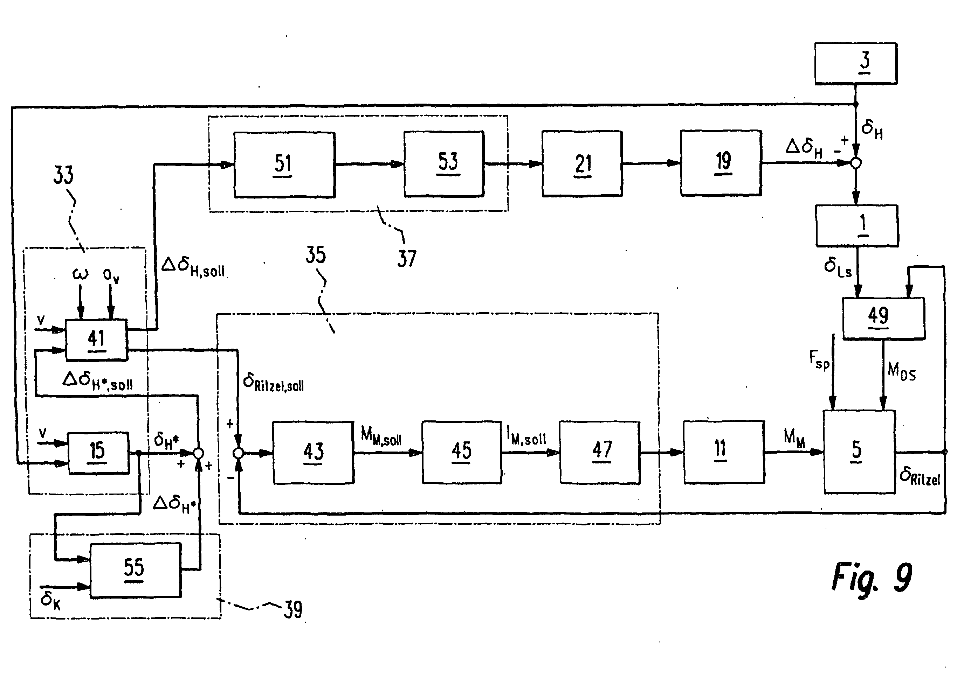

In Fig. 9 ist ein zweites Ausführungsbeispiel für die Integration einer Spurführungsregelung in das erfindungsgemäße Lenksystem dargestellt. Anders als bei dem Ausführungsbeispiel gemäß Fig. 2 wird das Ausgangssignal des Spurführungsreglers 55 nicht auf das Soll-Lenkmoment M_{M,Soll} addiert, sondern es wird eine Spurführungs-Lenkradwinkeldifferenz Δδ_{H*} zu dem modifizierten Lenkradwinkel δ_{H*} zu einem Soll-Lenkradwinkel δ_{H*,Soll} addiert und in den Fahrdynamikregler 41 eingeführt. Der Fahrdynamikregler 41 liefert die Ausgangsgrößen Korrektur-Lenkradwinkel Δδ_{H,Soll} und einen Soll-Ritzelwinkel δ_{Ritzel,Soll}, welcher zusammen mit dem gemessenen Ritzelwinkel δ_{Ritzel} die Eingangsgröße des Positionsreglers 43 darstellt.

Das erfindungsgemäße Lenksystem und das erfindungsgemäße Verfahren zum Lenken eines Fahrzeugs können auch auf Lenkungen mit elektrohydraulischer Momentenunterstützung, auf Steer-by-Wire-Lenksysteme und Lenkungen ohne Überlagerungsgetriebe 19 erweitert werden.

## Patentansprüche

1. Verfahren zum Lenken eines Fahrzeugs mit folgenden Verfahrensschritten:
- Erfassen des Lenkradwinkels (δ_{H});
- fahrgeschwindigkeitsabhängiges Modifizieren des Lenkradwinkels (δ_{H*});
- Ermitteln eines Korrektur-Lenkradwinkels (Δδ_{H, Soll}) in Abhängigkeit der Fahrdynamik des gelenkten Fahrzeugs;
- Überlagern von modifiziertem Lenkradwinkel (δ_{H*}) und Korrektur-Lenkradwinkel (Δδ_{H, Soll}) zu einem Soll-Lenkwinkel (δ_{Ritzel, Soll});
- Erfassen der Stellung der gelenkten Räder (δ_{Ritzel});
- Bilden der Winkeldifferenz (δ_{Ritzel, Soll} - δ_{Ritzel}) zwischen Soll-Lenkwinkel und der Stellung der gelenkten Räder (7);
- Regeln der Stellung der gelenkten Räder (7) in Abhängigkeit der Winkeldifferenz (δ_{Ritzel, Soll} - δ_{Ritzel}) und
- Kompensieren des Korrektur-Lenkradwinkels (Δδ_{H, Soll}) an der Lenksäule (1).

2. Verfahren nach Anspruch 1, **dadurch gekennzeichnet, dass** die Stellung der gelenkten Räder (7) durch einen ersten Positionsregler (43) mit PD-Charakteristik oder Kaskaden-Struktur oder einen adaptiven ersten Positionsregler (43) geregelt wird, dass das Ausgangssignal des ersten Positionsreglers (43) ein von einem Lenkmotor (11) auf das Ritzel des Lenkgetriebes (5) zu übertragendes Soll-Moment (M_{Soll}) ist, dass das Soll-Moment (M_{Soll}) in einen Soll-Strom (I_{Soll}) umgewandelt wird, und dass der Lenkmotor (11) mit dem Soll-Strom (I_{Soll}) angesteuert wird.

3. Verfahren nach Anspruch 2, **dadurch gekennzeichnet, dass** der erste Positionsregler (43) eine nichtlineare statische Kennlinie oder eine adaptiv verstellbare Kennlinie aufweist.

4. Verfahren nach einem der vorhergehende Ansprüche, **dadurch gekennzeichnet, dass** der modifizierte Lenkradwinkel (δ_{H*}) in eine Soll-Gierrate (ω_{ref}) oder eine Soll-Querbeschleunigung (a_{y}) umgewandelt wird, und dass ein Korrektur-Lenkradwinkel (Δδ_{H, Soll}) in Abhängigkeit der Soll-Gierrate (ω_{ref}) oder der Soll-Querbeschleunigung (a_{y}) geregelt wird.

5. Verfahren nach Anspruch 4, **dadurch gekennzeichnet, dass** der Gier-Regler (61) ein PID-Regler oder ein Modellfolge-Regler ist.

6. Verfahren nach einem der vorstehenden Ansprüche, **dadurch gekennzeichnet, dass** der Korrektur-Lenkradwinkel (Δδ_{H, Soll}) in ein Korrekturmoment (ΔM_{H, Soll}) umgewandelt wird, dass das zwischen beiden Teilen (1a, 1b) der Lenksäule (1) vorhandene Differenz-Moment (ΔM_{H}) gemessen wird, dass die Momentendifferenz aus dem Korrekturmoment (ΔM_{H, Soll}) und dem Differenz-Moment (ΔM_{H}) gebildet wird, und dass der Korrektur-Lenkradwinkel (Δδ_{H, Soll}) in Abhängigkeit der Momentendifferenz (ΔM_{H, Soll} - ΔM_{H}) kompensiert wird.

7. Verfahren nach einem der Ansprüche 4 oder 5, **dadurch gekennzeichnet, dass** der Korrektur-Lenkradwinkel (Δδ_{H, Soll}) in ein Korrekturmoment (ΔM_{H, Soll}) umgewandelt wird, dass das Korrekturmoment (ΔM_{H, Soll}) in einen Soll-Korrekturstrom (ΔI_{H, Soll}) umgewandelt wird, und dass der Korrektur-Lenkradwinkel (Δδ_{H, Soll}) am Lenkrad (3) in Abhängigkeit des Soll-Korrekturstroms (ΔI_{H, Soll}) kompensiert wird.

8. Verfahren nach einem der Ansprüche 4 oder 5, **dadurch gekennzeichnet, dass** die Drehwinkel-Differenz (Δδ_{H, Ist}) zwischen beiden Teilen (la, 1b) der Lenksäule (1) gemessen wird, dass die Winkeldifferenz aus Korrektur-Lenkradwinkel (Δδ_{H, Soll}) und Drehwinkel-Differenz (Δδ_{H, Ist}) gebildet wird, und dass der Korrektur-Lenkradwinkel (Δδ_{H, Soll}) am Lenkrad (3) in Abhängigkeit der Winkeldifferenz (Δδ_{H,Soll} - Δδ_{H, Ist}) kompensiert wird.

9. Verfahren nach einem der vorhergehende Ansprüche, **dadurch gekennzeichnet, dass** eine Spurführungs-Lenkradwinkeländerung (δ_{K}) ermittelt wird, und dass in Abhängigkeit der Spurführungs-Lenkradwinkeländerung (δ_{K}) und des modifizierten Lenkradwinkels (δ_{H*}) dem Soll-Lenkmoment (M_{M, Soll}) eine Soll-Momentendifferenz (ΔM_{M, Soll}) überlagert wird.

10. Verfahren nach einem der Ansprüche 1 bis 8, **dadurch gekennzeichnet, dass** eine Spurführungs-Lenkradwinkeländerung (δ_{K}) ermittelt wird, dass die Winkeldifferenz aus modifiziertem Lenkradwinkel (δ_{H*}) und Spurführungs-Lenkradwinkeländerung (δ_{K}) gebildet wird, dass in Abhängigkeit der Winkeldifferenz (δ_{H*} - δ_{K}) dem modifizierten Lenkradwinkel (δ_{H*}) eine Spurführungs-Lenkradwinkeldifferenz (Δδ_{H*}) überlagert wird, und dass in Abhängigkeit des daraus resultierenden Soll-Lenkradwinkels (δ_{H*, Soll}) der Soll-Lenkwinkel (δ_{Ritzel, Soll}) geregelt wird.

11. Computerprogramm, **dadurch gekennzeichnet, dass** die Verfahrensschritte eines Verfahrens nach einem der vorstehenden Ansprüche verwendet werden.

12. Speichermedium, **dadurch gekennzeichnet, dass** das Computerprogramm, nach Anspruch 11 auf ihm abgespeichert ist.

13. Steuergerät zum Steuern der Lenkung eines Fahrzeugs, **dadurch gekennzeichnet, dass** in dem Steuergerät ein Computerprogramm nach Anspruch 11 verwendet wird.

14. Lenkung für ein Fahrzeug mit einem an einer Lenksäule (1) angeordneten Lenkrad (3), mit einem Lenkgetriebe (5), mit einem an der Lenksäule (1) angeordneten dritten Drehwinkelsensor (27) oder ersten Momentensensor (29), mit einem über ein Überlagerungsgetriebe (19) auf die Lenksäule (1) wirkenden Lenkradmotor (11), mit einem hydraulischen oder elektrischen Lenksteller, mit einem zweiten Drehwinkelsensor (13) zur Messung der Stellung der gelenkten Räder (7) und mit einem Steuergerät, **dadurch gekennzeichnet, dass** ein auf die gelenkten Räder (7) wirkender Lenkmotor (11) vorhanden ist, und dass das Steuergerät ein Steuergerät nach Anspruch 13 ist.

## Claims

1. Method for steering a vehicle, comprising the following method steps:
- detecting the steering-wheel angle (δ_{H});
- modifying the steering-wheel angle (δ_{H*}) as a function of the vehicle speed;
- determining a correction steering-wheel angle (Δδ_{H}, set) as a function of the driving dynamics of the steered vehicle;
- superimposing the modified steering-wheel angle (δ_{H*}) and correction steering-wheel angle (Δδ_{H, set}) to form a setpoint steering angle (δ_{pinion, set});
- detecting the position of the steered wheels (δₚᵢₙᵢₒₙ);
- forming the angle difference (δ_{pinion, set} - δₚᵢₙᵢₒₙ) between the setpoint steering angle and the position of the steered wheels (7);
- controlling the position of the steered wheels (7) as a function of the angle difference (δ_{pinion, set} - δₚᵢₙᵢₒₙ), and
- compensating for the correction steering-wheel angle (Δδ_{H, set}) at the steering column (1).

2. Method according to Claim 1, **characterized in that** the position of the steered wheels (7) is controlled by a first position controller (43) with PD characteristics or a cascade structure, or an adaptive first position controller (43), **in that** the output signal from the first position controller (43) is a setpoint torque (Mₛₑₜ) which is to be transmitted from a steering motor (11) to the pinion of the steering gear unit (5), **in that** the setpoint torque (Mₛₑₜ) is converted into a setpoint current (Iₛₑₜ), and **in that** the steering motor (11) is driven by the setpoint current (Iₛₑₜ).

3. Method according to Claim 2, **characterized in that** the first position controller (43) has a non-linear static characteristic curve or an adaptively adjustable characteristic curve.

4. Method according to one of the preceding claims, **characterized in that** the modified steering-wheel angle (δ_{H*}) is converted into a setpoint yaw rate (ω_{ref}) or a setpoint lateral acceleration (a_{y}), and **in that** a correction steering-wheel angle (Δδ_{H, set}) is controlled as a function of the setpoint yaw rate (ω_{ref}) or the setpoint lateral acceleration (a_{y}).

5. Method according to Claim 4, **characterized in that** the yaw controller (61) is a PID controller or a model reference adaptive controller.

6. Method according to one of the preceding claims, **characterized in that** the correction steering-wheel angle (Δδ_{H, set}) is converted into a correction torque (ΔM_{H, set}), **in that** the difference torque (ΔM_{H}) present between the two parts (1a, 1b) of the steering column (1) is measured, **in that** the torque difference is formed from the correction torque (ΔM_{H, set}) and the difference torque (ΔM_{H}), and **in that** the correction steering-wheel angle (Δδ_{H, set}) is compensated for as a function of the torque difference (ΔM_{H, set} - ΔM_{H}).

7. Method according to either of Claims 4 or 5, **characterized in that** the correction steering-wheel angle (Δδ_{H, set}) is converted into a correction torque (ΔM_{H, set}), **in that** the correction torque (ΔM_{H, set}) is converted into a setpoint correction current (ΔI_{H, set}), and **in that** the correction steering-wheel angle (Δδ_{H,} set) at the steering wheel (3) is compensated for as a function of the setpoint correction current (ΔI_{H, set}).

8. Method according to either of Claims 4 or 5, **characterized in that** the rotational-angle difference (Δδ_{H, act}) between the two parts (1a, 1b) of the steering column (1) is measured, **in that** the angle difference is formed from the correction steering-wheel angle (Δδ_{H}, ₛₑₜ) and the rotational-angle difference (Δδ_{H, act}), and **in that** the correction steering-wheel angle (Δδ_{H, set}) at the steering wheel (3) is compensated for as a function of the angle difference (Δδ_{H, set} - Δδ_{H, act}).

9. Method according to one of the preceding claims, **characterized in that** a lateral guidance steering-wheel angle change (δ_{K}) is determined, and **in that** a setpoint torque difference (ΔM_{M, set}) is superimposed on the setpoint steering torque (M_{M, set}) as a function of the lateral guidance steering-wheel angle change (δ_{K}) and the modified steering-wheel angle (δ_{H*}).

10. Method according to one of Claims 1 to 8, **characterized in that** a lateral guidance steering-wheel angle change (δ_{K}) is determined, **in that** the angle difference is formed from the modified steering-wheel angle (δ_{H*}) and the lateral guidance steering-wheel angle change (δ_{K}), **in that** a lateral guidance steering-wheel angle difference (Δδ_{H*}) is superimposed on the modified steering-wheel angle (δ_{H*}) as a function of the angle difference (δ_{H*} - δ_{K}), and **in that** the setpoint steering angle (δ_{pinion, set}) is controlled as a function of the resulting setpoint steering-wheel angle (δ_{H*, set}).

11. Computer program, **characterized in that** the method steps of a method according to one of the preceding claims are used.

12. Storage medium, **characterized in that** the computer program according to Claim 11 is stored in the said medium.

13. Controller for controlling the steering system of a vehicle, **characterized in that** a computer program according to Claim 11 is used in the controller.

14. Steering system for a vehicle, having a steering wheel (3) which is arranged on a steering column (1), having a steering gear unit (5), having a third rotational-angle sensor (27) or first torque sensor (29) which is arranged on the steering column (1), having a steering-wheel motor (11) which acts on the steering column (1) by means of a variable-ratio gear unit (19), having a hydraulic or electric steering actuator, having a second rotational-angle sensor (13) for measuring the position of the steered wheels (7), and having a controller, **characterized in that** there is a steering motor (11) which acts on the steered wheels (7), and **in that** the controller is a controller according to Claim 13.

## Revendications

1. Procédé pour diriger un véhicule, comprenant les étapes suivantes :
- détection de l'angle de volant (δ_{H}) ;
- modification de l'angle de volant (δ_{H*}) en fonction de la vitesse de conduite ;
- détermination d'un angle de volant de correction (Δδ_{H, consigne}) en fonction de la dynamique de conduite du véhicule dirigé ;
- combinaison de l'angle de volant modifié (δ_{H*}) et de l'angle de volant de correction (Δδ_{H, consigne}) pour obtenir un angle de direction (δ_{pignon, consigne}) ;
- détection de la position des roues dirigées (δ_{pignon}) ;
- formation de la différence angulaire (δ_{pignon, consigne} - δ_{pignon}) entre l'angle de direction de consigne et la position des roues (7) dirigées ;
- régulation de la position des roues (7) dirigées en fonction de la différence angulaire (δ_{pignon, consigne} - δ_{pignon}), et
- compensation de l'angle de volant de correction (Δδ_{H, consigne}) au niveau de la colonne de direction (1).

2. Procédé selon la revendication 1,
**caractérisé en ce que**
la position des roues (7) dirigées est régulée par un premier régulateur de position (43) à caractéristique PD ou structure en cascade ou par un premier régulateur de position (43) adaptatif, le signal de sortie du premier régulateur de position (43) est un couple de consigne (c_{consigne}) à transmettre par un moteur de direction (11) au pignon de l'engrenage de direction, le couple de consigne (c_{consigne}) est converti en un courant de consigne (I_{consigne}) et le moteur de direction (11) est commandé par le courant de consigne (I_{consigne}).

3. Procédé selon la revendication 2,
**caractérisé en ce que**
le premier régulateur de position (43) présente une ligne caractéristique statique non linéaire ou réglable de manière adaptative.

4. Procédé selon l'une quelconque des revendications précédentes,
**caractérisé en ce que**
l'angle de volant modifié (δ_{H*}) est converti en un taux de lacet de consigne (ω_{réf}) ou une accélération transversale de consigne (a_{y}), et un angle de volant de correction (Δδ_{H, consigne}) est régulé en fonction du taux de lacet de consigne (ω_{réf}) ou de l'accélération transversale de consigne (a_{y}).

5. Procédé selon la revendication 4,
**caractérisé en ce que**
le régulateur de lacet (61) est un régulateur PID ou un régulateur suivant un modèle.

6. Procédé selon l'une quelconque des revendications précédentes,
**caractérisé en ce que**
l'angle de volet de correction (Δδ_{H, consigne}) est converti en un couple de correction (ΔM_{H, consigne}), on mesure le couple de différence (ΔM_{H}) entre les deux parties (la, 1b) de la colonne de direction (1), on forme la différence de couple entre le couple de correction (Δδ_{H, consigne}) et le couple de différence (ΔM_{H}), et l'angle de volant de correction (Δδ_{H, consigne}) est compensé en fonction de la différence de couple (ΔM_{H, consigne} - ΔM_{H}).

7. Procédé selon l'une quelconque des revendications 4 ou 5,
**caractérisé en ce que**
l'angle de volant de correction (Δδ_{H, consigne}) est converti en un couple de correction (ΔM_{H, consigne}), le couple de correction (ΔM_{H, consigne}) est converti en un courant de correction de consigne (ΔI_{H, consigne}), et l'angle de volant de correction (Δδ_{H, consigne}) sur le volant (3) est compensé en fonction du courant de correction de consigne (ΔI_{H, consigne}).

8. Procédé selon l'une quelconque des revendications 4 ou 5,
**caractérisé en ce que**
on mesure la différence d'angle de rotation (Δδ_{H, réel}) entre les deux parties (la, 1b) de la colonne de direction (1), on forme la différence angulaire entre l'angle de volant de correction (Δδ_{H, réel}), et l'angle de volant de correction (Δδ_{H, consigne}) sur le volant (3) est compensé en fonction de la différence angulaire (Δδ_{H, consigne} - Δδ_{H, réel}).

9. Procédé selon l'une quelconque des revendications précédentes,
**caractérisé en ce qu'**
on détermine une variation d'angle de volant d'alignement (δ_{K}), et en fonction de la variation d'angle de volant d'alignement (δ_{K}) et de l'angle de volant modifié (δ_{H*}), une différence de couple de consigne (ΔM_{M, consigne}) est superposée au couple de direction de consigne (M_{M, consigne}).

10. Procédé selon l'une quelconque des revendications 1 à 8,
**caractérisé en ce qu'**
on détermine, on forme une variation d'angle de volant d'alignement (δ_{K}), on forme la différence angulaire entre l'angle de volant modifié (δ_{H*}) et la variation d'angle de volant d'alignement (δ_{K}), une différence angulaire de volant d'alignement (Δδ_{H*}) est superposée à l'angle de volant modifié (δ_{H*}) en fonction de la différence angulaire (δ_{H*} - δ_{K}), et l'angle de direction de consigne (δ_{pignon, consigne}) est régulé en fonction de l'angle de volant de consigne (δ_{H*, consigne}) en résultant.

11. Programme informatique,
**caractérisé en ce qu'**
il applique les étapes d'un procédé selon l'une quelconque des revendications précédentes.

12. Moyen de mémorisation,
**caractérisé en ce qu'**
il contient le programme informatique selon la revendication 11.

13. Appareil de commande pour commander la direction d'un véhicule,
**caractérisé en ce qu'**
il utilise un programme informatique selon la revendication 11.

14. Direction pour un véhicule avec un volant (3) disposé sur une colonne de direction (1), un engrenage de direction (5), un troisième capteur d'angle de rotation (27) ou un premier capteur de couple (29) disposé sur la colonne de direction (1), un moteur de volant (11) agissant par un engrenage de superposition (19) sur la colonne de direction (1), un régulateur de direction hydraulique ou électrique, un deuxième capteur d'angle de rotation (13) pour mesurer la position des roues (7) dirigées, et un appareil de commande,
**caractérisée en ce qu'**
elle comprend un moteur de direction (11) agissant sur les roues (7) dirigées, et l'appareil de commande est un appareil de commande selon la revendication 13.
